# EUROPÄISCHE PATENTSCHRIFT

(11) **EP 1 943 805 B1**
(45) Veröffentlichungstag und Bekanntmachung des Hinweises auf die Patenterteilung: **28.08.2013**
(21) Anmeldenummer: 06807534.0
(22) Anmeldetag: 25.10.2006
(51) Int. Cl.: H04L 29/06

(54) **VERFAHREN ZUR AUSWAHL EINER S-CSCF-EINHEIT INNERHALB EINES IMS BASIERTEN DIENSTEKOMMUNIKATIONSSYSTEMS**
METHOD FOR SELECTING AN S-CSCF UNIT WITHIN AN IMS-BASED SERVICE COMMUNICATION SYSTEM
PROCEDE DE SELECTION D'UNE ENTITE S-CSCF AU SEIN D'UN SERVEUR DE COMMUNICATION DE SERVICE BASE IMS

(30) Priorität: 02.11.2005 DE 102005052262
(43) Veröffentlichungstag der Anmeldung: 16.07.2008
(73) Patentinhaber: Siemens Aktiengesellschaft, 80333 München (DE)
(72) Erfinder: KUHN, Gerhard, 80687 München (DE); SEIDL, Robert, 82549 Königsdorf (DE); POLLAK, Christoph, A-1190 Wien (AT); POSTMANN, Erwin, A-7212 Forchtenstein (AT)
(86) Internationale Anmeldenummer: PCT/EP2006/067754
(87) Internationale Veröffentlichungsnummer: WO 2007/051746

(56) Entgegenhaltungen:
- WO-A-03/075596
- WO-A-2004/071104
- WO-A2-03/047162
- US-A1- 2004 246 965
- ERICSSON: "Clarification on terminology in 23.228: user and subscriber" 3GPP TSG-SA2 MEETING #25, CR 178, TDOC S2-022002, [Online] 24. Juni 2002 (2002-06-24), - 28. Juni 2002 (2002-06-28) Seiten 1-84, XP002419886 Finland Gefunden im Internet: URL:http://www.3gpp.org/ftp/tsg_sa/WG2_Arc h/TSGS2_25/tdocs/s2-022002.zip> [gefunden am 2007-02-12]

## Beschreibung

Die Erfindung betrifft ein Verfahren zur Auswahl einer Ser-ving-Call-Session-Control-Function-Einheit innerhalb eines auf dem "Internet Protocol Multimedia Subsystem" basierenden Dienstekommunikationssystems zur Registrierung eines Nutzers eines mobilen Kommunikationsendgerätes für zumindest einen Kommunikationsdienst innerhalb eines mobilen Kommunikationssystems, wobei das IMS basierte Dienstekommunikationssystem mehrere Serving-Call-Session-Control-Function-Einheiten und zumindest eine Interrogation-Call-Session-Control-Function-Einheit und das mobile Kommunikationssystem zumindest eine Policy-Decision-Point-Einheit aufweist.

In bestehenden Mobilfunksystemen der zweiten Generation sind bereits Kommunikationsdienste wie beispielsweise GPRS ("Gene-. ral Packet Radio Services") verfügbar, bei denen die Übertragung der Daten in Form von Datenpaketen erfolgt. Hierdurch ist eine verbesserte Ausnutzung der zur Verfügung stehenden Übertragungsressourcen in den zugehörigen Mobilfunksystemen bzw. mobilen Kommunikationssystemen möglich.

Insbesondere für mobile Kommunikationssysteme der dritten Generation, beispielsweise gemäß der UMTS ("Universal Mobile Telecommunication System") Übertragungstechnologie ausgebildeten Kommunikationssystemen, sind zur Erweiterung der bestehenden GPRS-Architektur und zur Erbringung zusätzlicher multimedialer Kommunikationsdienste optimierte Spezialkommunikationssysteme bzw. Dienstekommunikationssysteme, wie beispielsweise das "Internet Protocol Multimedia Subsystem" (IMS) Kommunikationssystem vorgesehen.

Die Dienstnutzer werden über ein Zugangskommunikationssystem, beispielsweise ein GPRS Zugangskommunikationssystem mit dem IMS basierten Dienstekommunikationssystem verbunden und über die bestehende Verbindung anschließend Daten- bzw. Multimediadienste vom IMS basierten Dienstekommunikationssystem bereit gestellt. An dieser Stelle seien beispielhaft für Kommunikations- bzw. Multimediadienste Sprachdienste, Datendienste, Audiodienste, Videodienste, Informationsdienste und Programmkommunikationsdienste genannt.

Innerhalb eines derartigen IMS basierten Dienstekommunikationssystems ist ein "Session Initiation Protocol" (SIP) Signalisierungsprotokoll zum Aufbau von Kommunikationsverbindungen vorgesehen. Über langzeitstabile Identifier, so genannte "SIP Uniform Resource Identifier" (SIP URI), welche ähnlich zu einer herkömmlichen Email-Adresse aufgebaut sind, erfolgt die Identifizierung der Kommunikationsteilnehmer innerhalb des IMS basierten Dienstekommunikationssystems.

Zur Implementierung des SIP Signalisierungsprotokolls sind spezielle Dienstesteuereinheiten vorgesehen, die Verbindungs-und Dienstesteuerfunktionen, so genannte "Call State Control Function" (CSCF) bereitstellen. Ein derartiges IMS basiertes Dienstekommunikationssystem umfasst beispielsweise eine "Serving Call Session Control Function" (S-CSCF)-Einheit, eine "Interrogation Call Session Control Function" (I-CSCF)-Einheit sowie eine "Proxy Call Session Control Function" (P-CSCF)-Einheit, welche unterschiedliche Signalisierungs- und Steueraufgaben übernehmen.

Die Auswahl der zum Aufbau eines Kommunikationsdienstes vorzusehenden S-CSCF-Einheit erfolgt derzeitig gemäß der im Standard 3GPP TS 23.228 beschriebenen Auswahlprozedur. Hierzu wird bisher durch die I-CSCF-Einheit eine Cx-Query-Nachricht bzw. Cx-Select-Pull-Nachricht erzeugt und an die Hauptmobilvermittlungsstelle ("Home Subscriber Server") übertragen. In den genannten Nachrichten ist zumindest die Identitätskennung der S-CSCF-Einheit enthalten, vorausgesetzt diese ist der Hauptvermittlungsstelle bereits bekannt. Zusätzlich zur Identitätskennung der S-CSCF-Einheit können - falls für den Aufbau des gewünschten Kommunikationsdienstes erforderlich - weitere, beispielsweise die Ressourcen ("capabilities") der S-CSCF-Einheit betreffende Daten mit übertragen werden. Ausgehend von den übermittelten Daten wird durch die I-CSCF-Einheit eine Neuregistrierung vorgenommen. Fehlt die Identitätskennung der S-CSCF-Einheit, so wird lediglich eine auf den übertragenen Ressourcen basierende Auswahl einer S-CSCF-Einheit durch die I-CSCF-Einheit getroffen.

In der Veröffentlichung von Ericcson "Clarification on terminology in 23.228: user and subscriber", 3GPP TSG-SA2 Meeting #25, CR 178, Tdoc S2-022002, Seiten 1-84, 24. Juni 2002 wird beschrieben, vgl. beispielsweise Fig. 5.1, dass eine Register Nachricht vom Endgerät über eine P-CSCF Einheit zu einer I-CSCF Einheit gesendet wird. Ein Cx-Query Nachricht der I-CSCF wird vom HSS mit einer Cx-Query-Response Nachricht beantwortet, in der der Name des S-CSCF angegeben ist, falls dieser dem HSS bekannt ist. Falls nicht, sendet die I-CSCF eine Cx-Select-Pull Nachricht an das HSS um die erforderlichen S-CSCF Eigenschaften zu erfragen, anhand derer sie eine S-CSCF auswählt. Daraufhin wird eine Registrierungsnachricht vom I_CSCF an die ausgewählte S-CSCF gesendet

Aufgabe der vorliegenden Erfindung ist es, ein Verfahren zur dynamischen Auswahl einer S-CSCF-Einheit innerhalb eines IMS basierten Dienstekommunikationssystems anzugeben, bei dem durch die Auswertung zusätzlicher Auswahlkriterien eine verbesserte Auswahl möglich wird. Die Aufgabe wird ausgehend von den Merkmalen der Oberbegriffe der Patentansprüche 1 und 12 durch deren kennzeichnende Merkmale gelöst.

Der wesentliche Aspekt des erfindungsgemäßen Verfahrens ist darin zu sehen, dass über eine der Policy-Decision-Point-Einheit zugeordnete Benutzer-Kontext-Servereinheit Nutzerinformationen und über eine Netzwerk-Kontext-Servereinheit Netzinformationen ermittelt werden, welche in der Policy-Decision-Point-Einheit miteinander verknüpft und davon nutzer- und/oder netzspezifische Auswahlkriterien abgeleitet werden. Unter Berücksichtigung der nutzer- und/oder netzspezifischen Auswahlkriterien wird anschließend eine geeignete S-CSCF-Einheit ausgewählt. Vorteilhaft wird durch das erfindungsgemäße Verfahren die im 3GPP TS 23.228 beschriebene Auswahlprozedur zur Ermittlung einer S-CSCF-Einheit dahingehend modifiziert, dass zusätzliche Informationen, insbesondere Benutzer- und Netzwerkbezogene Informationen bei der Auswahl der S-CSCF-Einheit mit berücksichtigt werden. Die genannten zusätzlichen Informationen werden unter Auswertung der Ressourcen der unterschiedlichen S-CSCF-Einheiten als Auswahlkriterien herangezogen. So können beispielsweise Nutzerprofile, Nutzertarifinformationen sowie Netzknoteneigenschaften als auch die aktuelle Auslastung des Kommunikationssystems bzw. der Zugangsnetzknoten und ggf. auch die Ortsinformationen eines Nutzers bei der Auswahl mitberücksichtigt werden. Weitere vorteilhafte Ausgestaltungen des erfindungsgemäßen Verfahrens sind den weiteren Ansprüchen zu entnehmen.

Im Folgenden wird die Erfindung an einem Ausführungsbeispiel und zugehöriger Figuren näher erläutert. Es zeigen:
- Fig. 1: beispielhaft in einem schematischen Blockschaltbild ein mobiles Kommunikationssystem mit einem IMS basierten Dienstekommunikationssystem und
- Fig. 2: beispielhaft die im Rahmen einer Auswahl einer S-CSCF-Einheit erfindungsgemäß zusätzlich vorgesehenen Signalisierungsschritte.

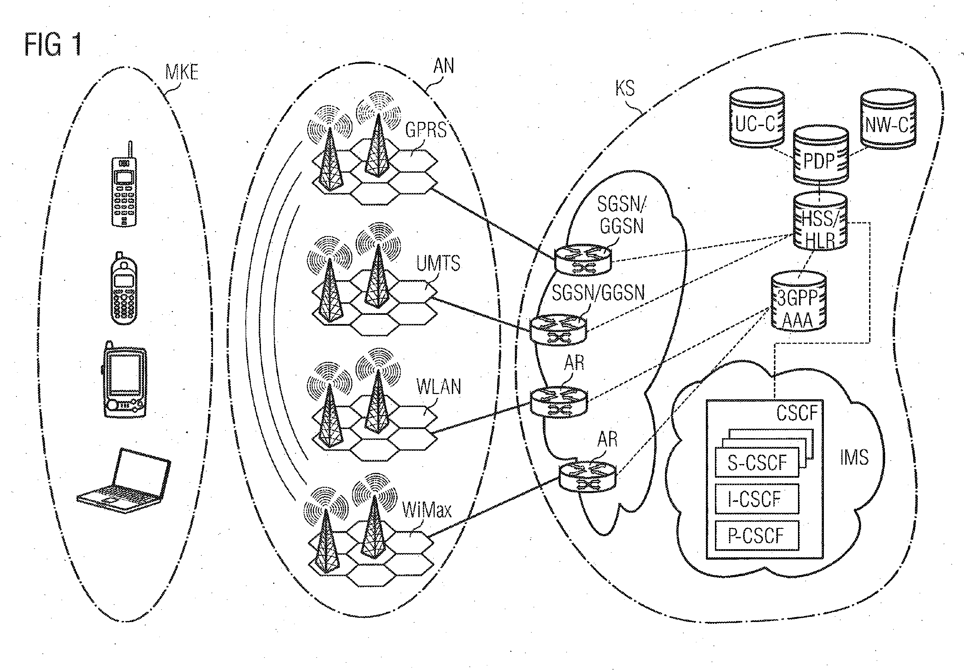

Das in Fig. 1 dargestellte schematische Blockschaltbild zeigt beispielhaft die Netzarchitektur eines mobilen Kommunikationssystems KS, welches über mehrere Zugangsnetze ("access networks") AN mit zumindest einem mobilen Kommunikationsgeräten MKE verbunden ist.

Die Zugangsnetze AN können hierbei unterschiedliche Zugangstechnologien unterstützen, beispielsweise "General Packet Radio Service", "Universal Mobile Telecommunication System", "Wireless Local Area Network", "Worldwide Interoperability for Microwave Access" oder "Enhanced Data Rates for GSM Evolution".

Im vorliegenden Ausführungsbeispiel sind beispielsweise ein erstes die "General Packet Radio Service" Zugangstechnologie unterstützendes Zugangsnetz GPRS, ein zweites die "Universal Mobile Telecommunication System" Zugangstechnologie unterstützendes Zugangsnetz UMTS, ein drittes die "Wireless Local Area Network" Zugangstechnologie unterstützendes Zugangsnetz WLAN sowie ein viertes die "Worldwide Interoperability for Microwave Access" unterstützendes Zugangsnetz WiMax vorgesehen, welche über jeweils zumindest eine zugeordnete Zugangsnetzknoteneinheit SGSN, GGSN, AR mit dem mobilen Kommunikationssystem KS verbunden sind.

Die Zugangsnetzknoteneinheiten SGSN, GGSN sind beispielsweise im Falle de ersten und zweiten Zugangsnetzes GPRS, UMTS als "Serving GPRS Support Node"-Zugangsnetzknoten SGSN und/oder als "Gateway GPRS Support Node"-Zugangsnetzknoten GGSN ausgebildet.

Der "Serving GPRS Support Node"-Zugangsnetzknoten SGSN ist im Wesentlichen für die Vermittlung der paketorientierten Kommunikationsdienste gemäß der GPRS-Zugangstechnologie zuständig, d.h. über diesen werden so genannte "Datensessions", d.h. paketorientierte Kommunikationsdienste, funktional aufgebaut, aufrecht erhalten und wiederum abgebaut. Hierbei ist jedem SGSN-Zugangsnetzknoten SGSN ein Versorgungsbereich zugeordnet.

Der "Gateway GPRS Support Node"-Zugangsnetzknoten GGSN hat als Gatewayeinheit im GPRS/UMTS-basierten Kommunikationsnetz die Aufgabe, den Datenverkehr zwischen externen Paketdatennetzen ("Packet Data Networks") und paketorientierten Vermittlungsnetzen ("Paket-Domain") des mobilen GPRS/UMTSbasierten Kommunikationsnetz zu koordinieren, wobei eine Gatewayeinheit zur Anpassung unterschiedlicher Datenübertragungstechnologien aneinander, insbesondere unterschiedlicher Datenübertragungsraten, vorgesehen ist.

Das dritte die "Wireless Local Area Network" Zugangstechnologie unterstützende Zugangsnetz WLAN sowie das vierte die "Worldwide Interoperability for Microwave Access" unterstützendes Zugangsnetz WiMax sind beispielsweise über Access-Router-Einheiten AR an das mobile Kommunikationssystem KS angeschlossen.

Die mobilen Kommunikationsendgeräte MKE sind im vorliegenden Ausführungsbeispiel als mobile Computereinheiten, Mobiltelefone unterschiedlichster Generationen oder Personal Digital Assistants ausgebildet.

Die Zugangsnetzknoteneinheiten SGSN, GGSN, AR sind über in der Figur 1 mittels einer strichliert gezeichneten Linie angedeutete Signalisierungsverbindungen mit einer Teilnehmerdatenbankeinheit ("Home Subscriber Server") HSS verbunden, welcher eine zentrale Teilnehmerdatenbasis ("Home Location Register") HLR zugeordnet ist.

Zur Bereitstellung der WLAN/WIMAX-Zugangstechnologie ist zusätzlich eine "Authentication, Authorization and Accounting" -Steuereinheit AAA gemäß dem 3GPP Standard vorgesehen, welches über Access-Router-Einheiten AR mit den dritten und vierten Zugangsnetz WLAN, WIMAX in Verbindung steht, sowie über eine weitere Signalisierungsverbindung an die Hauptmobilvermittlungseinheit HSS angeschlossen ist.

Die Teilnehmerdatenbankeinheit HSS ist mit einer Policy-Decision-Point-Einheit PDP verbunden, die unter anderem zur Ermittlung von nutzerspezifischen und netzwerkspezifischen Informationen mit einer Benutzer-Kontext-Servereinheit UC-C sowie einer Netzwerk-Kontext-Servereinheit NW-C verbunden ist. Über die Policy-Decision-Point-Einheit PDP wird beispielsweise die Zugangs- und/oder Überlastkontrolle beim Aufbau von Kommunikationsdiensten innerhalb des mobilen Kommunikationssystems KS gesteuert.

Im mobilen Kommunikationssystem KS ist neben der Teilnehmerdatenbankeinheit HSS ein Dienstekommunikationssystem IMS vorgesehen, welche eine Steuereinheit CSCF aufweist. Für die unterschiedlichen Signalisierungs- und Steueraufgaben sind mehrere "Serving Call Session Control Function"-Einheit S-CSCF, zumindest eine "Interrogation Call Session Control Function"-Einheit I-CSCF und eine "Proxy Call Session Control Function"-Einheit P-CSCF innerhalb der Steuereinheit CSCF vorgesehen, welche miteinander in Verbindung stehen. Darüber hinaus ist zumindest die "Interrogation Call Session Control Function"-Einheit I-CSCF mit der Hauptmobilvermittlungseinheit HSS über eine Signalisierungsverbindung verbunden.

Das Dienstekommunikationssystem IMS ist als "Internet Protocol Multimedia Subsystem" Dienstekommunikationssystem IMS ausgebildet, welches die Bereitstellung von Kommunikations- bzw. Multimediadiensten innerhalb des mobilen Kommunikationssystems KS ermöglicht. An dieser Stelle seien beispielhaft für Kommunikations- bzw. Multimediadienste Sprachdienste, Datendienste, Audiodienste, Videodienste, Informationsdienste und Programmkommunikationsdienste genannt.

Zum Aufbau derartiger Kommunikationsdienste stellt das IMS basierte Dienstekommunikationssystem IMS ein "Session Initiation Protocol" Signalisierungsprotokoll bereit. Innerhalb des IMS basierten Dienstekommunikationssystems IMS erfolgt die Identifizierung der Nutzer eines mobilen Kommunikationsendgerätes MKE über langzeitstabile Identifier, so genannte "SIP Uniform Resource Identifyer" (SIP URI), welche ähnlich zu einer herkömmlichen Email-Adresse aufgebaut sind. Zur Registrierung eines Nutzers für einen ausgewählten Kommunikationsdienst wird über eine standardisierte SIP-Register-Nachricht durch das mobile Kommunikationsendgeräte MKE erzeugt und an die Steuereinheit CSCF bzw. die "Proxy Call Session Control Function"-Einheit P-CSCF übertragen.

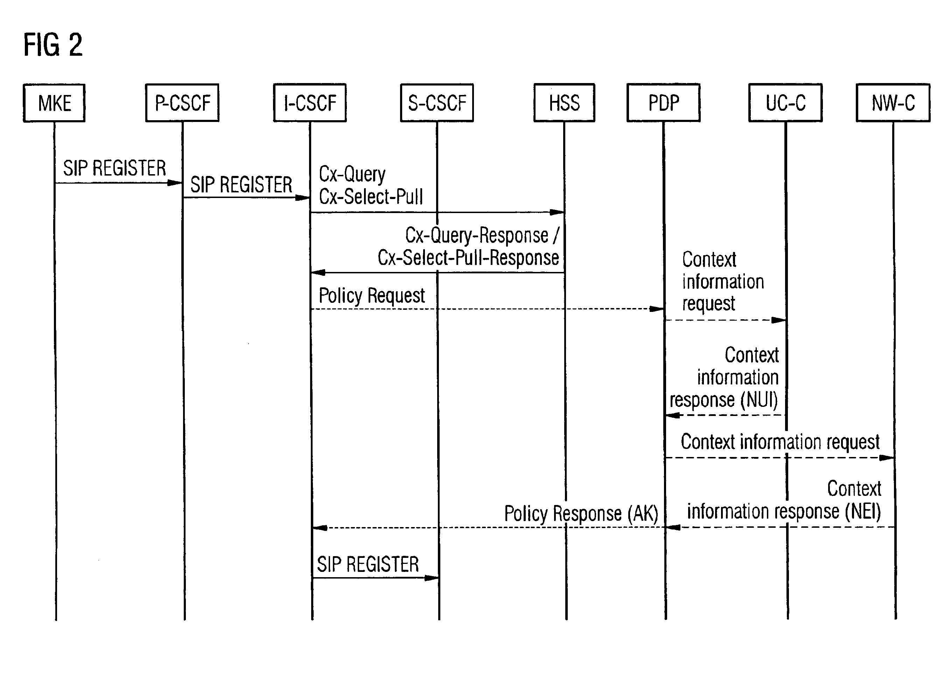

Erfindungsgemäß wird das standardisierte Verfahren zur Auswahl einer S-CSCF-Einheit S-CSCF um weitere Auswahlkriterien erweitert. In Figur 2 ist beispielhaft ein Ablaufdiagramm zur Erläuterung der bei der Auswahlprozedur durchgeführten Signalisierungsschritte dargestellt.

Die Registrierung eines Kommunikationsdienstes wird durch die Erzeugung einer SIP-Register-Nachricht durch das mobile Kommunikationsendgerät MKE initiiert, welches die SIP-Register-Nachricht über die P-CSCF-Einheit P-CSCF zur I-CSCF-Einheit I-CSCF überträgt.

Gemäß Standard 3GPP TS 23.228 wird daraufhin in der I-CSCF-Einheit eine Cx-Query/Cx-Select-Pull-Nachricht gebildet und an die Teilnehmerdatenbankeinheit HSS übertragen.

Sofern in der Teilnehmerdatenbankeinheit HSS für den vorgesehenen Kommunikationsdienst bereits eine S-CSCF-Einheit S-CSCF' zugeordnet ist und dessen Identitätskennung bekannt ist, wird diese von der Teilnehmerdatenbankeinheit HSS über die Cx-Query/Cx-Select-Pull-Response-Nachricht an die I-CSCF-Einheit I-CSCF übertragen. Zusätzlich zur Identitätskennung der S-CSCF-Einheit können - falls für den Aufbau des gewünschten Kommunikationsdienstes erforderlich - weitere, beispielsweise die Ressourcen ("capabilities") der auszuwählenden S-CSCF-Einheit betreffende Daten mit übertragen werden.

Ist in der Teilnehmerdatenbankeinheit HSS zum Anfragezeitpunkt jedoch keine Zuordnung einer S-CSCF-Einheit S-CSCF festgelegt, dann wird ggf. basierend auf den die Ressourcen ("capabilities") der auszuwählenden S-CSCF-Einheit angebenden Daten in der I-CSCF-Einheit eine Policy-Request-Nachricht erzeugt und an die Policy-Decision-Point-Einheit PDP übertragen.

Die Netzadresse der Policy-Decision-Point-Einheit PDP ist in einer bevorzugten Ausführungsform in der I-CSCF-Einheit I-CSCF fest abgespeichert oder ist in der Teilnehmerdatenbank-einheit HSS bzw. der zentralen Teilnehmerdatenbasis HLR hinterlegt und wird über die Cx-Query/Cx-Select-Pull-Response-Nachricht von der Teilnehmerdatenbankeinheit HSS an die I-CSCF-Einheit I-CSCF übertragen.

Die Policy-Decision-Point-Einheit PDP ist vorzugsweise als Policy-Server-Einheit im "Home Public Land Mobile Network"-Kommunikationssystem (H-PLMN) vorgesehen, welche die zur Auswahl der S-CSCF-Einheit S-CSCF anzuwendenden Auswahlkriterien AK ermittelt. Zur Ermittlung der Auswahlkriterien AK wird jeweils durch die Policy-Decision-Point-Einheit PDP mittels einer Context-Information-Request-Nachricht eine Anfrage an die Benutzer-Kontext-Servereinheit UC-C und die Netzwerk-Kontext-Servereinheit NW-C für den die Registrierung initiierenden Nutzer gestartet.

Mittels der Benutzer-Kontext-Servereinheit UC-C werden die für den Benutzer des mobilen Kommunikationsendgerätes MKE gespeicherten Nutzerinformationen NUI abgerufen. Nutzerinformationen NUI können beispielsweise die Tarifkonditionen des Nutzers betreffende Informationen, vom Benutzer vorgegebene Kommunikationsprofile oder eine gewünschte Mindestübertragungsqualität betreffen. Darüber hinaus können den aktuellen Aufenthaltsorts des Nutzers betreffende Informationen vorliegen.

Die Netzwerk-Kontext-Servereinheit MW-C ist zur Ermittlung von Netzinformationen NEI vorgesehen, welche die durch den Nutzer in Anspruch genommene Netzkomponenten des mobilen Kommunikationssystems KS oder die technischen Eigenschaften ("capabilities") des vom Nutzer zur Kommunikation verwendeten mobilen Kommunikationsendgerätes MKE betreffen. Beispielsweise können diese die aktuelle Lastverteilung des gesamten mobilen Kommunikationssystems KS oder von einzelnen Netzkomponenten sowie die Sende-/Wiedergabeeigenschaften und/oder Sende-/Wiedergabekapazitäten des mobilen Kommunikationsendgerätes MKE des Nutzers betreffen.

Die über die Benutzer-Kontext-Servereinheit UC-C und Netzwerk-Kontext-Servereinheit NW-C ermittelten Nutzerinformationen NUI und Netzinformationen NEI werden jeweils über eine Context-Information-Response-Nachricht an die Policy-Decision-Point-Einheit PDP übertragen.

In der Policy-Decision-Point-Einheit PDP werden anschließend die ermittelten Nutzer- und Netzinformationen NUI, NEI miteinander verknüpft und davon geeignete nutzer- und/oder netzspezifische Auswahlkriterien AK ("Policies") abgeleitet, welche anschließend von der Policy-Decision-Point-Einheit PDP mittels einer Policy-Response-Nachricht an die I-CSCF-Einheit I-CSCF übertragen werden.

Basierend auf den empfangenen nutzer- und/oder netzspezifischen Auswahlkriterien AK wird durch die I-CSCF-Einheit I-CSCF die Netzadresse einer passenden S-CSCF-Einheit S-CSCF ermittelt. Alternativ kann bereits in der Policy-Decision-Point-Einheit PDP unter Auswertung der nutzer- und/oder netzspezifische Auswahlkriterien AK die Netzadresse einer passenden S-CSCF-Einheit S-CSCF ermittelt werden.

Im Anschluss daran wird durch die I-CSCF-Einheit das im Standard 3GPP TS 23.228 vorgegebene Auswahlverfahren fortgesetzt, und zwar wird durch die I-CSCF-Einheit I-CSCF eine SIP-REGISTER-Nachricht erzeugt und an die Netzadresse der ausgewählten S-CSCF-Einheit S-CSCF übertragen, welche durch die ausgewählte S-CSCF-Einheit in der im Standard 3GPP TS 23.228 beschriebenen Weise beantwortet bzw. weiterverarbeitet wird.

### Bezugszeichenliste

- AK: nutzer- und/oder netzwerkspezifische Auswahlkriterien
- AN: Zugangsnetze
- CSCF: Dienstesteuereinheit
- GGSN: Gateway-GPRS-Support-Node-Zugangsnetzknoten
- GPRS: erstes Zugangsnetz
- HLR: zentrale Teilnehmerdatenbank
- HSS: Teilnehmerdatenbankeinheit
- I-CSCF: Interrogation Call Session Control Function-Einheit
- IMS: Dienstkommunikationssystem
- KS: mobiles Kommunikationssystem
- MKE: mobiles Kommunikationsendgerät
- NEI: Netzwerkinformationen
- NM-C: Netzwerk-Kontext-Servereinheit
- NUI: Nutzerinformationen
- P-CSCF: Proxy-Call-Session-Control-Function-Einheit
- PDP: Policy-Decision-Point-Einheit
- S-CSCF: Serving-Call-Session-Control-Function-Einheit
- SGSN: Serving-GPRS-Support-Node-Zugangsnetzknoten
- UC-C: Benutzer-Kontext-Servereinheit
- UMTS: zweites Zugangsnetz
- WiMAX: viertes Zugangsnetz
- WLAN: drittes Zugangsnetz

## Patentansprüche

1. Verfahren zur Auswahl einer Serving-Call-Session-Control-Function-Einheit (S-CSCF) innerhalb eines auf dem "Internet Protocol Multimedia Subsystem" more (IMS) here basierenden Dienstekommunikationssystems zur Registrierung eines Nutzers eines mobilen Kommunikationsendgerätes (MKE) für zumindest einen Kommunikationsdienst innerhalb eines mobilen Kommunikationssystems (KS), wobei das IMS basierte Dienstekommunikationssystems (IMS) mehrere Serving-Call-Session-Control-Function-Einheiten (S-CSCF) und zumindest eine Interrogation-Call-Session-Control-Function-Einheit (I-CSCF) und das mobile Kommunikationssystem (KS) zumindest eine Policy-Decision-Point-Einheit (PDP) aufweist,
**dadurch gekennzeichnet,**
**dass** über eine der Policy-Decision-Point-Einheit (PDP) zugeordnete Benutzer-Kontext-Servereinheit (UC-C) Nutzerinformationen und über eine Netzwerk-Kontext-Servereinheit (NW-C) Netzinformationen ermittelt werden,
**dass** die Nutzer- und Netzinformationen in der Policy-Decision-Point-Einheit (PDP) miteinander verknüpft und davon nutzer- und/oder netzspezifische Auswahlkriterien (AK) abgeleitet werden,
**dass** unter Berücksichtigung der nutzer- und/oder netzspezifischen Auswahlkriterien (AK) eine geeignete S-CSCF-Einheit (S-CSCF) ausgewählt wird.

2. Verfahren nach Anspruch 1,
**dadurch gekennzeichnet,**
**dass** unter Berücksichtigung der nutzer- und/oder netzspezifischen Auswahlkriterien (AK) die geeignete S-CSCF-Einheit (S-CSCF) in der I-CSCF-Einheit (I-CSCF) oder der Policy-Decision-Point-Einheit (PDP) ausgewählt wird.

3. Verfahren nach Anspruch 1 oder 2,
**dadurch gekennzeichnet,**
**dass** bei der Auswahl die Netzadresse der geeigneten S-CSCF-Einheit (S-CSCF) ermittelt wird.

4. Verfahren nach einem der Ansprüche 1 bis 3,
**dadurch gekennzeichnet,**
**dass** über die Benutzer-Kontext-Servereinheit (UC-C) als Nutzerinformationen die den Nutzer des mobilen Kommunikationsendgerätes (MKE) betreffenden Tarifdaten, durch den Nutzer vorgegebene Nutzerprofile, Übertragungsqualitätsvorgaben und/oder Benutzerortinformationen ermittelt werden.

5. Verfahren nach einem der Ansprüche 1 bis 4,
**dadurch gekennzeichnet,**
**dass** über die Netzwerk-Kontext-Servereinheit (NW-C) als Netzinformationen die aktuelle Lastverteilung innerhalb des mobilen Kommunikationssystem (KS), die Netzarchitektur und/oder die technischen Eigenschaften des vom Nutzer verwendeten mobilen Kommunikationsendgerätes ermittelt werden.

6. Verfahren nach einem der Ansprüche 1 bis 5,
**dadurch gekennzeichnet,**
**dass** zur Ermittlung der nutzer- und netzspezifischen Auswahlkriterien (AK) durch die Policy-Decision-Point-Einheit (PDP) mittels einer Context-Information-Request-Nachricht eine Anfrage jeweils an die Benutzer-Kontext-Servereinheit (UC-C) und die Netzwerk-Kontext-Servereinheit (NW-C) gestartet wird.

7. Verfahren nach einem der Ansprüche 1 bis 6,
**dadurch gekennzeichnet,**
**dass** die über die Benutzer-Kontext-Servereinheit (UC-C) ermittelten Nutzerinformationen und die über die Netzwerk-Kontext-Servereinheit (NW-C) ermittelten Netzinformationen jeweils über eine Context-Information-Response-Nachricht an die Policy-Decision-Point-Einheit (PDP) übertragen werden.

8. Verfahren nach einem der Ansprüche 1 bis 7,
**dadurch gekennzeichnet,**
**dass** die nutzer- und/oder netzspezifischen Auswahlkriterien (AK) von der Policy-Decision-Point-Einheit (PDP) mittels einer Policy-Request-Nachricht durch die I-CSCF-Einheit (I-CSCF) angefordert werden.

9. Verfahren nach einem der Ansprüche 1 bis 8,
**dadurch gekennzeichnet,**
**dass** die nutzer- und/oder netzspezifischen Auswahlkriterien (AK) von der Policy-Decision-Point-Einheit (PDP) mittels einer Policy-Response-Nachricht an die I-CSCF-Einheit (I-CSCF) übertragen werden.

10. Verfahren nach einem der Ansprüche 1 bis 9,
**dadurch gekennzeichnet,**
**dass** die Policy-Decision-Point-Einheit (PDP) als Policy-Server-Einheit im "Home Public Land Mobile Network"-Kommunikationssystem (H-PLMN) ausgebildet wird.

11. Verfahren nach einem der Ansprüche 1 bis 10,
**dadurch gekennzeichnet,**
**dass** die Netzadresse der Policy-Decision-Point-Einheit (PDP) in der I-CSCF-Einheit (I-CSCF) gespeichert oder in einer Teilnehmerdatenbankeinheit (HSS) hinterlegt ist und über eine Cx-Query/Cx-Select-Pull-Response-Nachricht von der Teilnehmerdatenbankeinheit (HSS) an die I-CSCF-Einheit (I-CSCF) übertragen wird.

12. Policy-Decision-Point-Einheit (PDP) zur Verwendung in einem Verfahren zur Auswahl einer Serving-Call-Session-Control-Function-Einheit (S-CSCF) innerhalb eines auf dem "Internet Protocol Multimedia Subsystem" more (IMS) here basierenden Dienstekommunikationssystems zur Registrierung eines Nutzers eines mobilen Kommunikationsendgerätes (MKE) für zumindest einen Kommunikationsdienst innerhalb eines mobilen Kommunikationssystems (KS), wobei das IMS basierte Dienstekommunikationssystems (IMS) mehrere Serving-Call-Session-Control-Function-Einheiten (S-CSCF) und zumindest eine Interrogation-Call-Session-Control-Function-Einheit (I-CSCF) und das mobile Kommunikationssystem (KS) zumindest eine Policy-Decision-Point-Einheit (PDP) aufweist, wobei die Policy-Decision-Point-Einheit (PDP) **dadurch gekennzeichnet ist,**
**dass** sie Mittel aufweist
zur Ermittlung von Nutzerinformationen über eine der Policy-Decision-Point-Einheit (PDP) zugeordneten Benutzer-Kontext-Servereinheit (UC-C),
zur Ermittlung von Netzinformationen über eine der Policy-Decision-Point-Einheit (PDP) zugeordneten Netzwerk-Kontext-Servereinheit (NW-C),
zur Verknüpfung der Nutzer- und Netzinformationen in der Policy-Decision-Point-Einheit (PDP), und
zur Ableitung nutzer- und/oder netzspezifischer Auswahlkriterien (AK) zur Auswahl einer geeigneten S-CSCF-Einheit (S-CSCF) auf Basis der verknüpften Nutzer- und Netzinformationen.

## Claims

1. Method for selecting a serving call session control function unit (S-CSCF) within a service communication system based on the "Internet Protocol Multimedia Subsystem" (IMS) in order to register a user of a mobile communication terminal (MKE) for at least one communication service within a mobile communication system (KS), wherein the IMS-based service communication system (IMS) has several serving call session control function units (S-CSCF) and at least one interrogation call session control function unit (I-CSCF) and the mobile communication system (KS) has at least one policy decision point unit (PDP),
**characterised in that**
user information is determined using a user context server unit (UC-S) that is assigned to the policy decision point unit (PDP) and network information is determined using a network context server unit (NW-C),
**in that** the user information and network information are interlinked in the policy decision point unit (PDP) and user-specific and/or network-specific selection criteria (AK) are derived from said information and are taken into consideration to select a suitable S-CSCF unit (S-CSCF).

2. Method according to claim 1,
**characterised in that**
the suitable S-CSCF unit (S-CSCF) is selected in the I-CSCF unit (I-CSCF) or the policy decision point unit (PDP) taking into consideration the user and/or network specific selection criteria (AK).

3. Method according to claim 1 or 2,
**characterised in that**
during the selection process, the network address of the suitable S-CSCF unit (S-CSCF) is determined.

4. Method according to one of claims 1 to 3,
**characterised in that**
using the user context server unit (UC-S) the tariff data relating to the user of the mobile communication terminal (MKE), user profiles given by the user, transmission quality specifications and/or user location information are determined as user information.

5. Method according to one of claims 1 to 4,
**characterised in that**
using the network context server unit (NW-C), the current load distribution within the mobile communication system (KS), the network architecture and/or the technical features of the mobile communication terminal used by the user are determined as network information.

6. Method according to one of claims 1 to 5,
**characterised in that**
in order to determine the user and network specific selection criteria (AK), the policy decision point unit (PDP) uses a context information request message to start a request respectively to the user context server unit (UC-C) and the network context server unit (NW-C).

7. Method according to one of claims 1 to 6,
**characterised in that**
the user information determined using the user context server unit (UC-S) and the network information determined using the network context server unit (NW-C) is transmitted respectively via a context information response message to the policy decision point unit (PDP).

8. Method according to one of claims 1 to 7,
**characterised in that**
the user and/or network specific selection criteria (AK) is requested from the policy decision point unit (PDP) by the I-CSCF unit (I-CSCF) by means of a policy request message.

9. Method according to one of claims 1 to 8,
**characterised in that**
the user and/or network specific selection criteria (AK) are transmitted from the policy decision point unit (PDP) to the I-CSCF unit (I-CSCF) by means of a policy response message.

10. Method according to one of claims 1 to 9,
**characterised in that**
the policy decision point unit (PDP) is designed as a policy server unit in the "Home Public Land Mobile Network" communication system (H-PLMN).

11. Method according to one of claims 1 to 10,
**characterised in that**
the network address of the policy decision point unit (PDP) is saved in the I-CSCF unit (I-CSCF) or stored in a subscriber database unit (HSS) and is transmitted via a Cx query/Cx select pull response message from the subscriber database unit (HSS) to the I-CSCF unit (I-CSCF).

12. Policy decision point unit (PDP) for use in a method for selecting a serving call session control function unit (S-CSCF) within a service communication system based on the "Internet Protocol Multimedia Subsystem" (IMS) in order to register a user of a mobile communication terminal (MKE) for at least one communication service within a mobile communication system (KS), wherein the IMS-based service communication system (IMS) has several serving call session control function units (S-CSCF) and at least one interrogation call session control function unit (I-CSCF) and the mobile communication system (KS) has at least one policy decision point unit (PDP), wherein the policy decision point unit (PDP) is **characterised in that**
it has means
of determining user information by way of a user context server unit (UC-C) assigned to the policy decision point unit (PDP),
of determining network information by way of a network context server unit (NW-C) assigned to the policy decision point unit (PDP),
of linking the user and network information in the policy decision point unit (PDP), and
of deriving user and/or network-specific selection criteria (AK) for selecting a suitable S-CSCF unit (S-CSCF) on the basis of the linked user and network information.

## Revendications

1. Procédé de sélection d'une entité à fonction de contrôle de session d'appel de service (S-CSCF) dans un système de communication de services basé sur le sous-système multimédia à protocole internet (IMS) pour l'enregistrement d'un utilisateur d'un terminal de communication mobile (MKE) pour au moins un service de communication dans un système de communication mobile (KS), le système de communication de services (IMS) basé IMS comportant plusieurs entités à fonction de contrôle de session d'appel de service (S-CSCF) et au moins une entité à fonction de contrôle de session d'appel d'interrogation (I-CSCF), et le système de communication mobile (KS) comportant au moins une entité logique prenant des décisions politiques (PDP),
**caractérisé en ce que** :
- des informations d'utilisateur sont déterminées via une unité de serveur de contexte d'utilisateur (UC-C) associée à l'entité logique prenant des décisions politiques (PDP) et des informations de réseau sont déterminées via une unité de serveur de contexte de réseau (NW-C) ;
- les informations d'utilisateur et de réseau sont associées entre elles dans l'entité logique prenant des décisions politiques (PDP) et des critères de sélection (AK) spécifiques à l'utilisateur et/ou au réseau en sont dérivés ;
- une entité S-CSCF (S-CSCF) appropriée est sélectionnée compte tenu des critères de sélection (AK) spécifiques à l'utilisateur et/ou au réseau.

2. Procédé selon la revendication 1, **caractérisé en ce que** l'entité S-CSCF (S-CSCF) appropriée est sélectionnée compte tenu des critères de sélection (AK) spécifiques à l'utilisateur et/ou au réseau dans l'entité I-CSCF (I-CSCF) ou dans l'entité logique prenant des décisions politiques (PDP).

3. Procédé selon la revendication 1 ou 2, **caractérisé en ce que** l'adresse réseau de l'entité S-CSCF (S-CSCF) appropriée est déterminée lors de la sélection.

4. Procédé selon l'une des revendications 1 à 3, **caractérisé en ce que** sont déterminées, via l'unité de serveur de contexte d'utilisateur (UC-C), en tant qu'informations d'utilisateur, les données tarifaires concernant l'utilisateur du terminal de communication mobile (MKE), des profils d'utilisateur prédéfinis par l'utilisateur, des spécifications de qualité de transmission et/ou des informations de localisation d'utilisateur.

5. Procédé selon l'une des revendications 1 à 4, **caractérisé en ce que** sont déterminées, via l'unité de serveur de contexte de réseau (NW-C), en tant qu'informations de réseau, la répartition actuelle de la charge dans le système de communication mobile (KS), l'architecture de réseau et/ou les caractéristiques techniques du terminal de communication mobile utilisé par l'utilisateur.

6. Procédé selon l'une des revendications 1 à 5, **caractérisé en ce que**, pour la détermination des critères de sélection (AK) spécifiques à l'utilisateur et au réseau par l'entité logique prenant des décisions politiques (PDP) au moyen d'un message « Context Information Request », une requête est lancée à destination respectivement de l'unité de serveur de contexte d'utilisateur (UC-C) et de l'unité de serveur de contexte de réseau (NW-C).

7. Procédé selon l'une des revendications 1 à 6, **caractérisé en ce que** les informations d'utilisateur déterminées par l'intermédiaire de l'unité de serveur de contexte d'utilisateur (UC-C) et les informations de réseau déterminées par l'intermédiaire de l'unité de serveur de contexte de réseau (NW-C) sont transmises à l'entité logique prenant des décisions politiques (PDP) respectivement par l'intermédiaire d'un message « Context Information Response ».

8. Procédé selon l'une des revendications 1 à 7, **caractérisé en ce que** les critères de sélection (AK) spécifiques à l'utilisateur et/ou au réseau sont demandés par l'entité I-CSCF (I-CSCF) à l'entité logique prenant des décisions politiques (PDP) au moyen d'un message « Policy Request ».

9. Procédé selon l'une des revendications 1 à 8, **caractérisé en ce que** les critères de sélection (AK) spécifiques à l'utilisateur et/ou au réseau sont transmis de l'entité logique prenant des décisions politiques (PDP) à l'entité I-CSCF (I-CSCF) au moyen d'un message « Policy Response ».

10. Procédé selon l'une des revendications 1 à 9, **caractérisé en ce que** l'entité logique prenant des décisions politiques (PDP) est réalisée en tant qu'entité serveur de politiques dans le système de communication dans le réseau local mobile terrestre public (H-PLMN).

11. Procédé selon l'une des revendications 1 à 10, **caractérisé en ce que** l'adresse réseau de l'entité logique prenant des décisions politiques (PDP) est stockée dans l'entité I-CSCF ou déposée dans une unité de base de données d'abonnés (HSS) et est transmise de l'unité de base de données d'abonnés (HSS) à l'entité I-CSCF (I-CSCF) par l'intermédiaire d'un message « Cx-Query/Cx-Select Pull Response ».

12. Entité logique prenant des décisions politiques (PDP) destinée à être utilisée dans un procédé de sélection d'une entité à fonction de contrôle de session d'appel de service (S-CSCF) dans un système de communication de services basé sur le sous-système multimédia à protocole internet (IMS) pour l'enregistrement d'un utilisateur d'un terminal de communication mobile (MKE) pour au moins un service de communication dans un système de communication mobile (KS), le système de communication de services (IMS) basé IMS comportant plusieurs entités à fonction de contrôle de session d'appel de service (S-CSCF) et au moins une entité à fonction de contrôle de session d'appel d'interrogation (I-CSCF), et le système de communication mobile (KS) comportant au moins une entité logique prenant des décisions politiques (PDP), l'entité logique prenant des décisions politiques (PDP) étant
**caractérisée en ce qu'**elle comporte des moyens :
- pour déterminer des informations d'utilisateur via une unité de serveur de contexte d'utilisateur (UC-C) associée à l'entité logique prenant des décisions politiques (PDP) ;
- pour déterminer des informations de réseau via une unité de serveur de contexte de réseau (NW-C) associée à l'entité logique prenant des décisions politiques (PDP) ;
- pour associer les informations d'utilisateur et de réseau dans l'entité logique prenant des décisions politiques (PDP) et
- pour dériver des critères de sélection (AK) spécifiques à l'utilisateur et/ou au réseau pour sélectionner une entité S-CSCF (S-CSCF) appropriée sur la base des informations d'utilisateur et de réseau associées.
